# EUROPÄISCHE PATENTSCHRIFT

(11) **EP 4 165 377 B1**
(45) Veröffentlichungstag und Bekanntmachung des Hinweises auf die Patenterteilung: **31.07.2024**
(21) Anmeldenummer: 21732224.7
(22) Anmeldetag: 08.06.2021
(51) Int. Cl.: G01D 5/249, F15B 15/28

(54) **MESSSYSTEM UND DRUCKMITTELZYLINDER MIT EINEM MESSSYSTEM**
MEASURING SYSTEM AND PRESSURE MEDIUM CYLINDER COMPRISING A MEASURING SYSTEM
SYSTÈME DE MESURE ET CYLINDRE DE MILIEU DE PRESSION COMPRENANT UN SYSTÈME DE MESURE

(30) Priorität: 10.06.2020 DE 102020207280
(43) Veröffentlichungstag der Anmeldung: 19.04.2023
(73) Patentinhaber: Van Halteren Technologies Boxtel B.V., 5281 RS Boxtel (NL)
(72) Erfinder: CASPERS, Leo, 5658 EN Eindhoven (NL)
(74) Vertreter: Novagraaf Technologies
(86) Internationale Anmeldenummer: PCT/EP2021/065332
(87) Internationale Veröffentlichungsnummer: WO 2021/250021

(56) Entgegenhaltungen:
- EP-B1- 2 561 319
- DE-A1- 10 119 941
- US-A1- 2014 345 408

## Beschreibung

Die Erfindung betrifft ein Messsystem gemäß dem Oberbegriff des Patentanspruchs 1 und einen Druckmittelzylinder mit einem derartigen Messsystem gemäß dem Patentanspruch 12.

Bei Messsystemen sind verschiedene Ansätze bekannt um eine Absolutposition einer Kolbenstange relativ zu einem Druckmittelzylinderzu bestimmen.

In der Druckschrift US 7,631,592 B2 ist ein Positionsmesssystem für einen Hydraulikzylinder bekannt, das mindestens einen Sensor, einen Magneten und eine Kolbenstange mit einem metallischen Kern hoher Magnetisierbarkeit und mit einer Nutstruktur in im wesentlichen axialer Richtung, wobei die Nutstruktur mit einem Metall ausgefüllt ist, das eine geringere Magnetisierbarkeit als der Kern aufweist, so dass der Sensor ein Magnetfeld des Kerns misst, das durch die Nutstruktur verändert wird, und somit sowohl die relative als auch die absolute Position der Kolbenstange bestimmen kann.

Aus der US 5,905,215 A ist ein Verfahren zum Erfassen der Position und Verschieberichtung einer Kolbenstange einer Hydraulikzylinderanordnung bekannt. Die Hydraulikzylinderanordnung enthält eine Vielzahl von Magnetsensoren zur Ausgabe eines Magnetfeldänderungssignals, die neben einem Hydraulikzylinder angeordnet sind. Eine Vielzahl von Magnetsensoren arbeitet mit einer Vielzahl von magnetischen Vorsprüngen zusammen, die in gleichen Abständen entlang eines Kolbenstangenteils angeordnet sind, um das Magnetfeldänderungssignal zu erzeugen.

Die Druckschrift US 2002/0157531 A1 offenbart einen Aktuator, der einen Positionsgeber aufweist, der durch eine in der Kolbenstange ausgebildete spiralförmige Nut ausgebildet wird. Die Nut ist mit einem Material mit unterschiedlichen magnetischen Eigenschaften gefüllt, um eine glatte Außenfläche und ein sich änderndes erkennbares Signal zu erzeugen, wenn sich die Kolbenstange relativ zum Zylinder bewegt. Eine Anordnung von Hall-Effekt-Sensoren ist um die Kolbenstange herum vorgesehen, um bei der Bewegung der Kolbenstange phasenverschobene Signale zu liefern, so dass das Signal eines Sensors mit den Signalen anderer Sensoren in Beziehung gesetzt werden kann.

In der DE 101 19 941 A1 ist ein Druckmittelzylinder mit einem Messsystem zur Bestimmung einer Absolutposition einer Kolbenstange bezüglich eines Bezugspunktes offenbart. Das Messsystem weist eine längs der Kolbenstange verlaufende Codespur von binären Codeelementen und einen ortsfesten Sensor auf, der aus mehreren längs der Codespur angeordneten und jeweils eine begrenzte Anzahl von Codeelemente abtastenden Sensorelementen gebildet ist, wobei die Codeelemente einen Manchester-Code bilden.

Nachteilig an derartigen Messsystemen ist, dass die Länge des Sensors und die abzustastende Fläche, die Codespur, in ihrer Längsausrichtung entlang der Kolbenstange, sehr groß ist und somit der nicht ausnutzbare Hub des Kolbens im Druckmittelzylinder groß ist. Die Länge eines derartigen Sensors macht es unumgänglich, dass er auf einem speziellen Flansch montiert wird, der vor einem Dichtungsflansch montiert wird, was zu einer Erhöhung der Bauteilanzahl und damit zu einer Erhöhung der Verschleißteile und somit zu höheren Kosten führt.

Aus der EP 2 561 319 B1 sind binäre de Bruijn Sequenzen zur Positionsmessung bekannt. Aus der US 2014/345408 A1 ist eine trinäre Kodierung zur Positionsmessung bekannt.

Dem gegenüber liegt der Erfindung die Aufgabe zu Grunde, ein Messsystem zu schaffen, das bei einer reduzierten Anzahl von Teilen, geringeren Kosten und bei geringem Bauraum eine hohe Genauigkeit bei der Bestimmung einer Absolutposition einer Kolbenstange in einem Druckmittelzylinder, ermöglicht. Ferner ist es eine Aufgabe der Erfindung einen Druckmittelzylinder zu schaffen, bei dem ein Messsystem mit geringeren Abmessungen integriert ist um den ausnutzbaren Hub eines Kolbens in einem Druckmittelzylinder zu maximieren.

Diese Aufgaben werden gelöst durch Messsystem mit den Merkmalen des Patentanspruchs 1 und einen Druckmittelzylinder mit den Merkmalen des Patentanspruchs 12.

Ein erfindungsgemäßes Messsystem ist ausgelegt eine Position einer Kolbenstange relativ zu einem Bezugspunkt zu bestimmen und weist eine auf eine Kolbenstange aufgebrachte Codespur auf. Diese verläuft längs der Kolbenstange, also mit einer axialen Erstreckung entlang der Kolbenstange. Die Codespur ist durch Nuten und Plateaus gebildet, die radial an einer Mantelfläche der Kolbenstange, also in Umfangsrichtung, in ein Grundmaterial der Kolbenstange eingebracht und anschließend mit einer Schutzschicht versehen sind. Ein ortsfestes Sensorsystem mit einer Vielzahl von Sensorelementen, die parallel und radial beabstandet zu der Kolbenstange angeordnet sind, ist Bestandteil des Messsystems. Die Sensorelemente tasten jeweils eine begrenzte Anzahl von Codeelementen ab. Erfindungsgemäß sind die die Codespur ausbildenden Codeelemente als trinäre Codeelemente ausgebildet. Mit anderen Worten gesagt sind die Nuten und Plateaus in drei unterschiedlichen Ebenen gegenüber dem Grundmaterial vorliegend, wobei eine der Ebenen mit einer Ebene des Grundmaterials identisch sein kann, die jeweils ein mindestens trinäres Codeelement darstellen, wobei auch ein höherwertiges Codeelement, insbesondere eines mit mehreren Ebenen, denkbar ist. Diese Werte werden im Folgenden als 0, 1 und 2 dargestellt. Die Codefolge ist dabei als De Bruijn-Sequenz, oder als eine De Bruijn-Subsequenz, ausgeführt.

Besonders vorteilhaft ist bei der erfindungsgemäßen Auslegung des Messsystems, dass Bandbreite gespart wird und sich die Länge der Codespur bei gleichbleibendem Informationsgehalt gegenüber den aus dem Stand der Technik bekannten Lösungen deutlich verkürzt. Ferner ist es vorteilhaft, dass eine Länge des Sensorsystems auf die Länge der Codespur reduziert werden kann, so dass sich die Kosten des Sensorsystems entsprechen reduzieren. Die Länge der Codespur wird zumindest halbiert, was eine deutliche Erhöhung des Hubes und einer nutzbaren Länge des Kolbens zur Folge hat. Eine vereinfachte Integration des Sensorsystems im Messsystem ist ein weiterer vorteilhafter Effekt.

Weitere vorteilhafte Ausgestaltungen der Erfindung sind in den abhängigen Patentansprüchen beschrieben.

Vorzugsweise sind die Sensorelemente als lineare Hall-Sensoren ausgebildet.

Besonders vorteilhaft ist es, wenn ein Pitch der einzelnen Codeelemente in einem Bereich von 3 mm bis 8 mm liegt, insbesondere im Bereich von 5 mm. Als Pitch ist in der vorliegenden Anmeldung die Länge eines Codeelements in axialer Ausdehnung entlang der Kolbenstange zu verstehen, wobei ein Mittelpunkt eines Übergangs zwischen zwei Codeelementen als jeweiliger Bezugspunkt dient.

Bei einem erfindungsgemäßen Ausführungsbeispiel sind zwei unabhängige Sensorsysteme vorgesehen. Ein erstes Sensorsystem und ein zweites Sensorsystem. Beide Sensorsysteme sind vorzugsweise mit einer identischen Anzahl an Hall-Sensoren ausgeführt, so dass beide Systeme ähnlich, insbesondere identisch ausgebildet sind. Selbstverständlich sind auch eine Mehrzahl von Sensorsystemen denkbar.

Je nach Auslegung kann es vorteilhaft sein, wenn die Sensorelemente eines Sensorsystems in axialer Richtung in einer Reihe angeordnet sind. Besonders vorteilhaft ist es, wenn sich die einzelnen Hall-Sensoren, also die Sensorelemente zweier Sensorsysteme, abwechselnd aneinanderreihen. Mit anderen Worten gesagt ist das erstes Sensorelement des ersten Sensorsystems neben dem ersten Sensorelement des zweiten Sensorsystems angeordnet, gefolgt von zweiten Sensorelement des ersten Sensorsystems, gefolgt vom zweiten Sensorelement des zweiten Sensorsystems usw.

Bei einer vorteilhaften Ausführungsform sind die Sensorelemente derart ausgerichtet, dass die Sensorelemente des ersten Sensorsystems innerhalb eines Pitches eines Codeelementes angeordnet sind, während die Sensorelemente des zweiten Sensorsystems in einem Versatz zu den Codeelementen stehen. Der Versatz beträgt dabei vorzugsweise etwa ½ Pitch oder ¼ Pitch und bei einer Anordnung mit einer Mehrzahl von Sensorsystemen bei 1/n Pitch. Mit anderen Worten liegen die Sensorelemente des ersten Sensorsystems radial beabstandet innerhalb eines Pitches eines Codeelementes und die Sensorelemente des zweiten Sensorsystems abschnittsweise radial beabstandet in zwei aneinander angrenzenden Codeelementen. Bei einem ½ Pitch-Versatz ist gewährleistet, dass zumindest eines der Sensorsysteme ein hinreichendes Signal zur Ermittlung der Absolutposition der Kolbenstange erhält, während bei einem ¼ Pitch-Versatz eine Art zusätzlicher Erfassungskanal ausgebildet ist, der als redundantes Sensorsystem betrieben werden kann. Die Anwendung eines 1/n Pitch-Versatz ist besonders vorteilhaft, wenn mehr als zwei Sensorsysteme verwendet werden.

Wenn die Codeelemente höchstens einfache Sprünge aufweisen, dann ist diese vorteilhafter Weise erreicht, dass das Grundmaterial der Kolbenstange keinen großen inneren Spannungen ausgesetzt ist. Unter einem Sprung ist in der vorliegenden Anmeldung der Übergang zwischen zwei Codeelementen zu verstehen. Die möglichen Sprünge sind 0-0, 0-1, 0-2, 1-0, 1-1, 1-2, 2-0, 2-1 und 2-2. Die Bezeichnung 0 ist im vorliegenden Falle als tiefste Nut zu verstehen, wohingegen 1 als Plateau zwischen 0 und 2 zu verstehen ist und 2 ein Plateau darstellt, dass sich in etwa auf einer Ebene mit dem Grundmaterial der Kolbenstange befindet. Mit anderen Worten sind die 0- und 1-Codeelemente als Nuten in das Grundmaterial eingebracht, wohingegen es bei einem 2 Codeelemente im Bereich der Codespur keiner Ausnehmung bedarf. Unter einem einfachen Sprung ist zu verstehen, dass dieser einschrittig ist, also beispielsweise 0-1, 1-2, 2-1 oder 1-0. Um das Grundmaterial der Kolbenstange und der Deckschicht im Hinblick auf Spannungsspitzen zu schonen sind keine doppelten Sprünge, also 0-2- oder 2-0- Sprünge in der Codespur vorgesehen. Dies kann auch vorteilhaft bei der Stabilität der Dekodierung von Signalen der Sensorsysteme sein.

Es wird besonders bevorzugt, wenn über eine Länge von etwa 30 cm ein gemittelter Durchmesser der Kolbenstange konstant bleibt, bzw. wenn Veränderungen im Durchmesser über die vorgenannte Länge des Kolbens minimal sind.

In einer bevorzugten Weiterbildung sind kurze Folgen von identischen Codeelementen vorgesehen. Die maximal vorgesehene Länge einer Codefolge von identischen Codeelementen ist bei einer Codelänge von elf Codeelementen auf höchstens 4 identische Codeelemente zu begrenzen. Mit anderen Worten ist beispielsweise die Folge 1-0-0-0-0-0-1-2-1-2-1 nicht zu verwenden, da fünf identische Codeelemente aufeinander folgen.

In einer vorteilhaften Ausführungsform verändert sich die Folge der Codeelemente von einer Subsequenz zur nächsten zumindest minimal, so dass die Stabilität weiter erhöht wird.

Eine weitere vorteilhafte Ausführungsform hat eine De-Bruijn-Sequenz, die mindestens eine 0 und eine 2 in jeder De Bruijn-Subsequenz mit der Länge hat, die der Anzahl der Sensoren in einer Reihe entspricht.

Bei einem besonders bevorzugten Ausführungsbeispiel des erfindungsgemäßen Messsystems sind 0- und 2-Codeelemente weitestgehend voneinander beabstandet, wobei beide Codeelemente in der Codespur auftreten. Mit anderen Worten ist zwischen jedem 0- und 2-Codeelement zumindest ein 1-Codeelement vorgesehen. So werden Spannungsspitzen im Grundmaterial weiter reduziert.

Zur Bestimmung der präzisen Absolutposition bietet sich eine Plausibilitätsprüfung der Abtastergebnisse an. Diese kann derart vorgesehen sein, dass das Messsystem, basierend auf dem zuvor abgetasteten Codeelement und/oder der Bewegungsrichtung der Kolbenstange entlang der Sensoren, prüft, ob die gemessene Position mit vorherigen Abtastergebnissen übereinstimmt. Das Messsystem ist auf die Codefolge eingestellt, so dass bei einem von dem zu erwartenden Ergebnis abweichendes Ergebnis zu einer Fehlermeldung führen kann, da in einem solchen Falle die Absolutposition der Kolbenstange nicht ermittelt werden kann, was bei weiterem Betrieb zu einem Schaden führen könnte. Eine Art Notaus eines Gesamtsystems, in dem das Messsystem verbaut ist, ist als Schadensprävention bei einer negativen Plausibilitätsprüfung denkbar.

Bei einer bevorzugten Ausführungsform des erfindungsgemäßen Messsystems weist jedes Sensorsystem elf Hall-Sensoren auf, wobei diese nicht redundant zueinander ausgeführt sein müssen. Die Zuverlässigkeit kann aber durch den Einsatz redundanter Sensoren erhöht werden, z.B. ein oder zwei pro Sensorreihe.

Ein erfindungsgemäßer Druckmittelzylinder ist mit einem vorbeschriebenen Messsystem ausgeführt um eine Absolutposition einer Kolbenstange zu bestimmen. Das ortsfeste Sensorsystem ist dann an dem Druckmittelzylinder angeordnet.

Ein Ausführungsbeispiel eines erfindungsgemäßen Messsystems ist in den Figuren dargestellt.

Es zeigen
Figur 1 eine perspektivische Teilansicht eines Druckmittelzylinders mit einem Messsystem, und
Figur 2 in einem Schnitt durch einen Zylinderkopf schematisch das Messsystem und die Zuordnung zwischen Sensorelementen und Codeelementen.

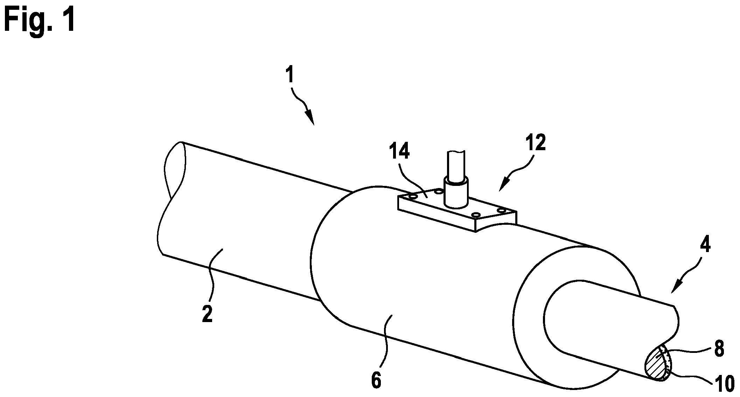

Figur 1 zeigt einen Druckmittelzylinder 1 mit einem Zylindergehäuse 2. In diesem befindet sich ein aus dem Stand der Technik bekannter Kolben, der hier nicht näher dargestellt wird. An diesem ist eine Kolbenstange 4 befestigt. Diese tritt aus einem Zylinderkopf 6 aus, wobei die Kolbenstange 4 im Inneren des Zylinderkopfes 6 abgedichtet ist. Die Kolbenstange 4 ist aus einem Grundmaterial 8, das beispielsweise ein Stahlkern sein kann, und einer dünnen keramischen oder metallischen Schicht 10, die um das Grundmaterial herum, beispielsweise durch Flammspritzen oder Auftragsschweißen, aufgebracht ist, gebildet. Die Schicht 10 ist nicht, oder nur begrenzt magnetisierbar.

In den Zylinderkopf 6 ist ein Messsystem 12 mit einem Gehäuse 14 eingesetzt, wobei das Messsystem dazu ausgelegt ist, eine Absolutposition der Kolbenstange 4 zu erfassen. Das Messsystem 12 befindet sich in einem nicht von Druck beaufschlagten Bereich des Zylinderkopfes 6 zwischen der Dichtung und einem Abstreifer.

Das Grundmaterial 8 der Kolbenstange 4 ist mit einer zumindest teilweise radial umlaufenden, längs der Kolbenstange 4 verlaufenden Codespur versehen. Diese Codespur ist aus einzelnen Codeelementen gebildet, die im Folgenden eingehender beschrieben werden.

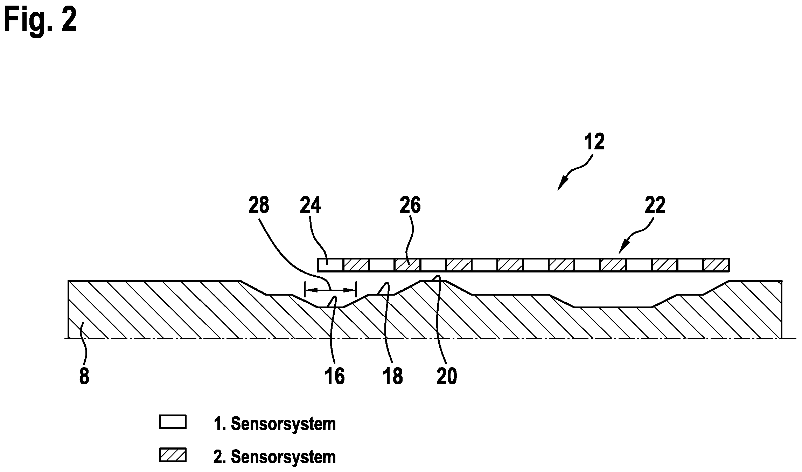

In der Figur 2 ist in einem Schnitt durch den Zylinderkopf 6 ein Ausschnitt eines erfindungsgemäßen Messsystems 12 gezeigt. Wie bereits vorstehend angedeutet weist das Grundmaterial 8 der Kolbenstange 4 eine Codespur auf. Diese ist aus einer Mehrzahl von Codeelementen 16, 18, 20 gebildet. Weiterhin ist eine Sensoranordnung 22 Bestandteil des Messsystems 12. Diese ist im vorliegenden Ausführungsbeispiel aus zwei Sensorsystemen gebildet, wobei das erste Sensorsystem in diesem Ausführungsbeispiel acht Sensorelemente 24 und das zweite Sensorsystem ebenfalls acht Sensorelemente 26 aufweist. Die einzelnen Sensorelemente 24, 26 sind als lineare Hall-Sensoren ausgebildet. Ferner ist in Figur 2 ein Pitch 28 gezeigt, der die Länge eines Codeelementes 16, 18, 20 darstellt. Ein Pitch 28 ist gemäß dem vorliegenden Ausführungsbeispiel auch die Länge von zwei Sensorelementen 24, 26.

In der Figur 2 ist eine trinäre Codespur gezeigt, die die Folge 0-1-2-1-1-0-0-1 aufweist. Die Codespur ist eine Subsequenz und basiert auf einer De Bruijn-Sequenz, die durch die Tatsache ausgezeichnet ist, dass jede Anordnung einer bestimmten Anzahl an Codeelementen 16, 18, 20 nur einmalig in der gesamten Codespur vorliegt. Grundsätzlich kann festgestellt werden, dass die kleinste Anordnung, für die die vorstehende Aussage wahr ist, der Anzahl der Sensorsysteme entspricht, oder größer ist. Demnach wäre es bei dem erfindungsgemäßen Messsystem 12 möglich, eine Codespur zu generieren, wobei eine Folge von Codeelementen 16, 18, 20 mit einer Länge gleich der Anzahl der Sensorelemente 24, 26 in einem Sensorsystem nur einmal auftritt. Aus fertigungstechnischen- und/oder messtechnischen Gründen sind aber weitere Maßnahmen bei der Generierung der Codespur zu beachten.

Grundsätzlich sollten lange Serien identischer Codeelemente 16, 18, 20 vermieden werden, sowie beachtet werden, dass die 0-Codeelemente 16 und die 2-Codeelemente 20 einen vergleichsweise geringen Anteil an der gesamten Codespur haben und nicht direkt benachbart zueinander angeordnet sind. Mit anderen Worten sind 0-2 und 2-0 Sprünge zu vermeiden um die Schutzschicht 10 und das Grundmaterial 8 und die Deckschicht 10 (nicht dargestellt) im Bereich der Sprünge vor vermeidbaren Spannungsspitzen zu schützen.

Es sollte ferner beachtet werden, dass eine Reihe von identische Codeelemente 16, 18, 20 in Folge maximiert wird, zum Beispiel auf vier identische Codeelemente 16, 18, 20 für eine achtstellige Codespur. Außerdem ist ein durchgehender Trend in eine Richtung, also von 0-Codeelementen 16 hin zu 2-Codeelemtenten 20, bzw. in umgekehrte Folge, zu vermeiden. Vielmehr sollte auf einen stetigen Wechsel zwischen den einzelnen Codeelementen 16, 18, 20 abgezielt werden.

Im vorliegenden Ausführungsbeispiel gemäß Figur 2 sind zwei Sensorsysteme mit jeweils acht lineare Hall-Sensoren 24, 26 ausgebildet. Die Sensorelemente 24 des ersten Sensorsystems weist einen identischen Pitch auf wie die Codeelemente 16, 18, 20. Die Sensorelemente 26 des zweiten Sensorsystems weisen ebenfalls einen identischen Pitch auf. Die Sensorelemente 24 des ersten Sensorsystems sind radial beabstandet, also gegenüberliegend, innerhalb eines Pitches der Codeelemente 16, 18, 20 angeordnet, wohingegen die Sensorelemente 26 des zweiten Sensorsystems in einem ½ Pitch-Versatz zu den Codeelementen 16, 18, 20 angeordnet sind. In dieser Anordnung sind die Sensorelemente 24, 26 direkt benachbart zueinander gelegen. So ist gewährleistet, dass zumindest eines der Sensorsysteme ein hinreichendes Signal bei einer Verschiebung der Kolbenstange ermitteln kann. In einem hier nicht dargestellten Ausführungsbeispiel liegen die Sensorelemente 26 des zweiten Sensorsystems mit ¼ Pitch-Versatz zu den Sensorelementen 24 des ersten Sensorsystems. So wird ein zweiter Messkanal geschaffen, der als redundantes Sensorsystem zum ersten Sensorsystem wirkt. Wenn mehr als zwei Sensorsysteme verwendet werden, also beispielsweise n Sensorsysteme, ist es vorteilhaft die Sensorsysteme mit eine 1/n Pitch-Versatz anzuordnen.

Bei einem Verschieben der Kolbenstange 4 werden folgende Schritte durchgeführt: Die Signale aller sechzehn Sensorelemente 24, 26 werden ausgelesen, eine Filterung-, Offset- und Verstärkungskorrektur werden durchgeführt. Die ermittelten Signale und, sofern verfügbar, die Signale aus vorherigen Messungen, werden in Verbindung mit der Bewegungsrichtung der Kolbenstange 4 genutzt, um die Position innerhalb der Codespur festzulegen und so auf die absolute Position der Kolbenstange 4 zurückzuführen.

Bei der Verwendung von einer Codespur nach De Bruijn sind keine Start-Codeelemente notwendig, wie es bei einer binären Codespur aus dem Stand der Technik notwendig ist. Ferner sind keine redundanten Codeelemente 16, 18, 20 notwendig. Die Länge der Codespur, bei gleicher oder höherer Informationsdichte, reduziert sich gegenüber der aus dem Stand der Technik bekannten Lösungen von 0,104 m bis auf 0,033 m, was eine maximale Kolbenlänge von bspw. 30 m anstatt der bekannten 26,52 m ermöglicht. Die Länge der Sensoranordnung reduziert sich ebenfalls von 0,1352 m bis auf 0,033 m.

Offenbart sind ein Messsystem und ein Druckmittelzylinder mit einem Messsystem.

### Bezugszeichenliste:

- 1: Druckmittelzylinder
- 2: Zylindergehäuse
- 4: Kolbenstange
- 6: Zylinderkopf
- 8: Grundmaterial
- 10: Schutzschicht
- 12: Messsystem
- 14: Gehäuse
- 16: 0-Codeelement
- 18: 1-Codeelement
- 20: 2-Codeelement
- 22: Sensoranordnung
- 24: Sensorelement des ersten Sensorsystems
- 26: Sensorelement des zweiten Sensorsystems
- 28: Pitch

## Patentansprüche

1. Messsystem zur Bestimmung der Position einer Kolbenstange (4) eines Druckmittelzylinders (1) relativ zu einem Bezugspunkt, wobei das Messsystem (12) eine auf die Kolbenstange (4) aufgebrachte längs der Kolbenstange (4) verlaufende Codespur, die durch in Umfangsrichtung verlaufende Nuten und Plateaus in einem Grundmaterial (8) der Kolbenstange (4) gebildet ist, aufweist, und wobei das Messsystem zumindest ein erstes relativ zum Bezugspunkt ortsfestes Sensorsystem mit einer Mehrzahl von Sensorelementen (24), die parallel und radial beabstandet zu der Kolbenstange (4) angeordnet sind, aufweist, und wobei jedes Sensorelement (24) eine begrenzte Anzahl von Codeelementen (16, 18, 20) abtastet, **dadurch gekennzeichnet, dass** zur Ausbildung der Codespur mindestens trinäre Codeelemente (16, 18, 20) verwendet sind, die eine De Bruijn-Sequenz und/oder eine De Bruijn-Subsequenz bilden.

2. Messsystem nach Anspruch 1, **dadurch gekennzeichnet, dass** die Sensorelemente (24) als lineare Hall-Sensoren ausgebildet sind.

3. Messsystem nach einem der vorhergehenden Ansprüche, **dadurch gekennzeichnet, dass** ein Pitch (28) der Codeelemente (24) entlang der Kolbenstange (4) zwischen 3 mm und 8 mm, vorzugsweise etwa 5 mm, beträgt.

4. Messsystem nach einem der vorhergehenden Ansprüche, **dadurch gekennzeichnet, dass** zumindest ein zweites Sensorsystem vorgesehen ist.

5. Messsystem nach Anspruch 4, **dadurch gekennzeichnet, dass** die Sensorelemente (24, 26) der Sensorsysteme jeweils in einer Reihe angeordnet sind, wobei ein erstes Sensorelement (24) des ersten Sensorsystems neben einem ersten Sensorelement (26) des zweiten Sensorsystems angeordnet ist und sich diese Anordnung mit n Sensorelementen (24, 26) fortsetzt.

6. Messsystem nach Anspruch 3, 4 und 5, **dadurch gekennzeichnet, dass** ein Sensorelement (24) des ersten Sensorsystems gegenüberliegend im Bereich eines Pitches (28) eines Codeelementes (16, 18, 20) angeordnet ist, und dass ein Sensorelement (26) des zweiten Sensorsystems mit einem Versatz gegenüberliegend zwischen zwei Codeelementen (16, 18, 20) angeordnet ist, der etwa 1/2 Pitch oder 1/4 Pitch beträgt, und/oder dass bei einer Vielzahl n von Sensorsystemen ein 1/n Pitch-Versatz vorgesehen ist.

7. Messsystem nach einem der vorhergehenden Ansprüche, **dadurch gekennzeichnet, dass** die Codeelemente (16, 18, 20) keine 0-2 und/oder 2-0 Sprünge aufweisen.

8. Messsystem nach einem der vorhergehenden Ansprüche, **dadurch gekennzeichnet, dass** lange Folgen von identischen Codeelementen (16, 18, 20) vermieden werden.

9. Messsystem nach einem der vorhergehenden Ansprüche, **dadurch gekennzeichnet, dass** 0- und 2-Codeelemente (16, 20) weitestmöglich voneinander beanstandet angeordnet sind, wobei zwischen jedem 0- und 2-Codeelement zumindest ein 1-Codeelement vorgesehen ist.

10. Messsystem nach einem der vorhergehenden Ansprüche, wobei das Messsystem so eingerichtet ist, dass beim Abtasten eines Codeelements (16, 18, 20) eine Plausibilitätsprüfung erfolgt, basierend auf dem vorherigen abgetasteten Codeelement (16, 18, 20) und/oder der Bewegungsrichtung entlang der Sensorelemente (24, 26).

11. Messsystem nach Anspruch 4, **dadurch gekennzeichnet, dass** jedes Sensorsystem elf Hall-Sensoren als Sensorelemente (24, 26) aufweist.

12. Druckmittelzylinder mit einem Messsystem (12) gemäß einem der vorhergehenden Ansprüche.

## Claims

1. Measuring system for determining the position of a piston rod (4) of a pressure medium cylinder (1) relative to a reference point, wherein the measuring system (12) has a code track that is applied to the piston rod (4), runs along the piston rod (4) and is formed by grooves and plateaus running in the circumferential direction in a base material (8) of the piston rod (4), and wherein the measuring system has at least a first sensor system that is stationary relative to the reference point and has a plurality of sensor elements (24) that are arranged parallel to and radially spaced from the piston rod (4), and wherein each sensor element (24) scans a limited number of code elements (16, 18, 20), **characterized in that**, to form the code track, at least trinary code elements (16, 18, 20) are used, which form a De Bruijn sequence and/or a De Bruijn subsequence.

2. Measuring system according to claim 1, **characterized in that** the sensor elements (24) are designed as linear Hall sensors.

3. Measuring system according to one of the preceding claims,
**characterized in that** a pitch (28) of the code elements (24) along the piston rod (4) is between 3 mm and 8 mm, preferably approximately 5 mm.

4. Measuring system according to one of the preceding claims,
**characterized in that** at least a second sensor system is provided.

5. Measuring system according to claim 4, **characterized in that** the sensor elements (24, 26) of the sensor systems are each arranged in a row, wherein a first sensor element (24) of the first sensor system is arranged next to a first sensor element (26) of the second sensor system, and this arrangement continues with n sensor elements (24, 26).

6. Measuring system according to claims 3, 4, and 5, **characterized in that** a sensor element (24) of the first sensor system is arranged opposite in the region of a pitch (28) of a code element (16, 18, 20), and **in that** a sensor element (26) of the second sensor system is arranged opposite between two code elements (16, 18, 20) with an offset that is approximately a 1/2 pitch or 1/4 pitch, and/or **in that** a 1/n pitch offset is provided for a plurality n of sensor systems.

7. Measuring system according to one of the preceding claims,
**characterized in that** the code elements (16, 18, 20) do not have 0-2 and/or 2-0 jumps.

8. Measuring system according to one of the preceding claims,
**characterized in that** long sequences of identical code elements (16, 18, 20) are avoided.

9. Measuring system according to one of the preceding claims,
**characterized in that** 0- and 2-code elements (16, 20) are arranged as far as possible from one another, wherein at least one 1-code element is provided between each 0- and 2-code element.

10. Measuring system according to one of the preceding claims, wherein the measuring system is designed such that, upon the scanning of a code element (16, 18, 20), a plausibility check is performed based upon the previous scanned code element (16, 18, 20) and/or the direction of movement along the sensor elements (24, 26).

11. Measuring system according to claim 4, **characterized in that** each sensor system has eleven Hall sensors as sensor elements (24, 26).

12. Pressure medium cylinder having a measuring system (12) according to one of the preceding claims.

## Revendications

1. Système de mesure permettant de déterminer la position d'une tige de piston (4) d'un vérin à fluide sous pression (1) par rapport à un point de référence, dans lequel le système de mesure (12) présente une piste de code appliquée sur la tige de piston (4) et s'étendant le long de la tige de piston (4), laquelle piste de code est formée par des rainures et des plateaux s'étendant dans la direction circonférentielle dans un matériau de base (8) de la tige de piston (4), et dans lequel le système de mesure présente au moins un premier système formant capteur fixe par rapport au point de référence et comportant une pluralité d'éléments de capteur (24) qui sont disposés parallèlement à la tige de piston (4) et à distance radiale de celle-ci, et dans lequel chaque élément de capteur (24) balaie un nombre limité d'éléments de code (16, 18, 20), **caractérisé en ce qu'**au moins des éléments de code (16, 18, 20) trinaires sont utilisés pour la réalisation de la piste de code, lesquels forment une suite de De Bruijn et/ou une sous-suite de De Bruijn.

2. Système de mesure selon la revendication 1, **caractérisé en ce que** les éléments de capteur (24) sont réalisés sous forme de capteurs à effet Hall.

3. Système de mesure selon l'une des revendications précédentes,
**caractérisé en ce qu'**un pas (28) des éléments de code (24) le long de la tige de piston (4) est compris entre 3 mm et 8 mm, de préférence est d'environ 5 mm.

4. Système de mesure selon l'une des revendications précédentes,
**caractérisé en ce qu'**au moins un second système formant capteur est prévu.

5. Système de mesure selon la revendication 4, **caractérisé en ce que** les éléments de capteurs (24, 26) des systèmes formant capteurs sont respectivement disposés en une rangée, dans lequel un premier élément de capteur (24) du premier système formant capteur est disposé à proximité d'un premier élément de capteur (26) du second système formant capteur et ladite disposition se poursuit avec n éléments de capteurs (24, 26).

6. Système de mesure selon les revendications 3, 4 et 5,
**caractérisé en ce qu'**un élément de capteur (24) du premier système formant capteur est disposé à l'opposé dans la zone d'un pas (28) d'un élément de code (16, 18, 20), **et en ce qu'**un élément de capteur (26) du second système formant capteur est disposé à l'opposé entre deux éléments de code (16, 18, 20) avec un décalage qui est d'environ 1/2 pas ou 1/4 pas, **et/ou en ce qu'**un décalage de pas de 1/n est prévu lorsqu'une pluralité n de systèmes formant capteurs est présente.

7. Système de mesure selon l'une des revendications précédentes,
**caractérisé en ce que** les éléments de code (16, 18, 20) ne présentent aucun saut de 0 à 2 et/ou de 2 à 0.

8. Système de mesure selon l'une des revendications précédentes,
**caractérisé en ce que** les longues suites d'éléments de code (16, 18, 20) identiques sont évitées.

9. Système de mesure selon l'une des revendications précédentes,
**caractérisé en ce que** les éléments de code 0 et 2 (16, 20) sont disposés de manière à être le plus éloignés possible les uns des autres, dans lequel au moins un élément de code 1 est prévu entre chaque élément de code 0 et 2.

10. Système de mesure selon l'une des revendications précédentes, dans lequel le système de mesure est configuré de telle sorte que, lors du balayage d'un élément de code (16, 18, 20), un contrôle de plausibilité est effectué sur la base de l'élément de code (16, 18, 20) balayé précédemment et/ou de la direction de déplacement le long des éléments de capteurs (24, 26).

11. Système de mesure selon la revendication 4, **caractérisé en ce que** chaque système formant capteur présente onze capteurs à effet Hall comme éléments de capteurs (24, 26).

12. Vérin à fluide sous pression comportant un système de mesure (12) selon l'une des revendications précédentes.
